# FASCICULE DE BREVET EUROPEEN

(11) **EP 0 510 136 B1**
(45) Date de publication et mention de la délivrance du brevet: **23.08.1995**
(21) Numéro de dépôt: 91918298.0
(22) Date de dépôt: 04.11.1991
(51) Int. Cl.: G06F 17/60, G07C 11/00

(54) **SYSTEME DE CONTROLE PREVISIONNEL POUR UN ENSEMBLE DE POSTES DE TRAVAIL**
VORHERSAGE-STEUERSYSTEM FÜR EINEN SATZ VON ARBEITSSTELLEN
ESTIMATIVE CONTROL SYSTEM FOR A GROUP OF WORK STATIONS

(30) Priorité: 06.11.1990 BE 9001045
(43) Date de publication de la demande: 28.10.1992
(73) Titulaire: Gifila S.A., B-4680 Oupeye (BE)
(72) Inventeur: HURLET, Philippe, B-4680 Hermée (BE); WATRIN, Charles, B-4280 Hannut (BE)
(74) Mandataire: Vanderperre, Robert
(86) Numéro de dépôt international: BE9100079
(87) Numéro de publication internationale: WO9208194

(56) Documents cités:
- EP-A- 0 427 511
- WO-A-82/02972
- WO-A-83/00399
- US-A- 4 858 120

## Description

La présente invention concerne un système pour contrôler automatiquement et de manière adaptative et prévisionnelle l'activité d'un ensemble de postes de travail, notamment des points de vente dans une organisation de services en fonction de l'affluence des demandes de services. Une application exemplaire d'un tel système concerne les agences bancaires et autres centres de services similaires.

On connaît des systèmes qui gèrent la réception de la clientèle. Un système exemplaire se trouve décrit dans la demande de brevet EP-A-0 460 152. Les systèmes de ce genre sont organisés pour réagir ponctuellement en fonction de l'arrivée de la clientèle, mais sans tenir aucun compte de l'évolution ultérieure qui pourrait résulter dans le déroulement des prestations fournies a la clientèle.

Or, les clients se présentent dans une agence de façon irrégulière suivant les heures, les jours et les mois, mais ils ont toujours la volonté d'être servis rapidement. Les agents, quant à eux, n'ont pas toujours conscience du nombre de clients se trouvant dans la zone d'attente et ils ne connaissent pas a priori la nature exacte des besoins de la clientèle se trouvant dans la zone d'attente.

Un début de solution à ce problème a été proposé dans le document EP-A-0 072 850. Le dispositif de contrôle décrit dans ce document permet d'orienter la clientèle vers une file d'attente locale devant un poste de travail, laquelle file d'attente est contrôlée de manière à assurer, aux clients dans ladite file d'attente, un temps d'attente minimal estimé en fonction du nombre de clients dans chaque file locale et du temps de service probable par client dans chaque file locale.

Ce dispositif permet, il est vrai, un contrôle effectif de l'activité d'un ensemble de postes de travail, du point de vue des clients attendant un service et il permet ainsi une répartition contrôlée de la clientèle.

La demande de brevet WO 83/00399 décrit un système comprenant un terminal délivrant à tout client un numéro d'ordre, un affichage visualisant au client en attente quel poste peut le servir en regard de son numéro, et un certain nombre de postes de service. Un décomptage de temps peut être effectué lorsqu'il y a des clients en attente (page 9, lignes 5-14). Lorsqu'il est détecté que la file d'attente est trop longue, une alarme peut être déclenchée pour demander l'ouverture de postes supplémentaires (page9, lignes 15-25).

Toutefois, les dispositifs précités ne tiennent aucun compte ni de la compétence de chaque prestataire de service et donc de la qualité du service assuré, ni d'une saine gestion prévisionnelle de l'ensemble des services prestés et donc de la rentabilité de l'ensemble des postes de travail.

D'autre part, la gestion par objectif qui est appliquée par certaines banques impose à chaque agent des objectifs de vente à atteindre pour la fin de l'année.

Actuellement, il arrive au chef d'agence de passer rapidement près des agents pour leur dire d'accélérer. En fait, le problème est plus complexe car la consigne à donner à chaque agent ne doit pas nécessairement être la même. En effet, l'allongement du temps d'attente de la clientèle peut être dû à une concentration élevée de clients demandant des services diversifiés ou être dû à une accumulation anormale de clients demandant un même service.

L'agent se retrouve donc devant un dilemme : d'une part, essayer de vendre un produit à un client qu'il a sous la main (ce qui prend plus de temps) afin d'atteindre les objectifs fixés par la direction et, d'autre part, veiller à ce que le service se passe suffisamment rapidement pour réduire l'attente des autres clients.

Malgré toutes les tentatives qui ont été mises en place jusqu'à présent, on n'est jamais arrivé à créer une conscience collective pour que la rentabilité générale de l'agence prévale sur les intérêts personnels des agents.

L'objectif que se fixe la présente invention est de permettre une adaptation automatique et prévisionnelle de l'activité d'un ensemble de postes de travail au fur et à mesure de l'évolution à la fois du nombre et de la nature des demandes de services.

Par activité d'un poste de travail on entend ici la prestation d'un service par un agent compétent pour le service demandé.

Conformément à l'invention, il est proposé dans la revendication 1 un système comprenant une unité centrale connectée, au moyen de canaux de communications, à plusieurs terminaux d'agents, à un dispositif de sélection par le client du service souhaité et à un dispositif d'appel affichant, dans la zone d'attente de la clientèle, le numéro d'ordre de chaque client pouvant être servi, l'unité centrale étant organisée pour mémoriser une liste des priorités de services désignant, pour chaque agent, les services par niveau de priorité pour lesquels il est compétent, mémoriser une table des temps de référence indiquant le temps de prestation moyen pour chaque service à fournir, calculer les écarts de temps d'attente probables pour chaque service à partir des temps d'attente de référence et du nombre de clients en attente, calculer un degré d'encombrement pour chaque service à partir des écarts de temps d'attente probables, mémoriser une liste des priorités d'appels désignant, pour chaque agent, les services auxquels il est affecté par niveau de priorité, cette liste étant établie à partir de la liste des priorités de services en réponse à un signal représentant le degré d'encombrement calculé, les agents affectés à un service étant ceux qui sont compétents pour ce service en première priorité lorsque le degré d'encombrement calculé est inférieur à un seuil d'encombrement prédéterminé.

Les revendications 2 à 11 définissent d'autres modes de réalisation de l'invention.

Grâce à l'invention, chaque agent est à tout moment correctement informé du nombre de clients qui se trouvent dans la zone d'attente et qui demandent un service pour lequel l'agent est compétent. Il sera ainsi à même d'adapter son attitude pour maintenir un service efficace.

Lorsque le degré d'encombrement calculé est supérieur au seuil d'encombrement précité, l'unité centrale envoie un signal d'avertissement aux terminaux d'agents 30 concernés et appelle un processus de contrôle d'encombrement. Le degré d'encombrement calculé est comparé à au moins un autre seuil d'encombrement prédéterminé et l'unité terminale est organisée pour appeler un processus pour modifier la liste des priorités d'appels lorsque le degré d'encombrement calculé est supérieur au seuil d'encombrement prédéterminé. Grâce à la modification des priorités d'appels un certain nombre d'agents supplémentaires, désignés parmi ceux qui occupent un niveau de priorité de service inférieur, se trouvent affectés au service de première priorité, le nombre d'agents supplémentaires étant automatiquement adapté à l'affluence momentanée des demandes pour le service en question. Le nombre d'agents affectés à un service encombré peut ainsi être augmenté temporairement de manière à permettre de résorber l'affluence anormale et d'éviter un état d'encombrement pouvant devenir alarmant.

Lorsqu'un état d'encombrement persiste en dépit de la modification des priorités d'appels, le système selon l'invention est organisé pour procéder automatiquement à des contrôles périodiques successifs, à l'aide de seuils d'encombrement discriminatoires prédéterminés, pouvant aller jusqu'à la mise en place d'un processus de contrôle d'un temps recommandé pour les prestations afin de réduire les temps attente de la clientèle et même jusqu'à l'appel d'agents en renfort. Le système permet ainsi de n'utiliser les renforts qu'à bon escient et pendant un minimum de temps possible. Dès que l'encombrement d'un service redescend en deçà du seuil fixé, le système libère l'agent appelé en renfort et celui-ci peut alors reprendre son travail normal. On évite ainsi les interventions sauvages ou empiriques qui, dans la pratique, conduisent souvent les agents qui donnent un coup de main, à poursuivre cette aide sans stricte nécessité, au détriment de leur propre travail.

L'invention a pour avantage d'assurer une gestion prévisionnelle dynamique et efficace de l'activité des postes de travail offrant des services à la clientèle en évitant d'arriver à une situation alarmante qui risquerait d'entraver ou de rendre dorénavant impossible une bonne qualité de service ou même simplement un fonctionnement efficace des services offerts.

Contrairement aux systèmes connus qui permettent une répartition contrôlée des clients, le système selon l'invention assure une gestion rationnelle et dynamique des agents en fonction à la fois de leurs compétences et de la demande.

Le système selon l'invention peut comprendre des unités supplémentaires de commande et/ou de surveillance, par exemple un terminal d'exploitation permettant de mettre en place la configuration du système et d'effectuer un contrôle visuel du fonctionnement du système, notamment en visualisant les temps d'attente réels maximums de la clientèle pour chaque service et, par exemple, l'heure à laquelle chaque client a été appelé par un agent.

D'autres particularités et aspects de l'invention ressortiront de l'exposé qui suit, dans lequel un mode de réalisation exemplaire du système conforme à l'invention est décrit à l'aide des dessins joints.

La figure 1 représente schématiquement un exemple d'implantation pour un système selon l'invention.

La figure 2 est un schéma par blocs d'un système selon l'invention.

Les figures 3 et 4 composent un organigramme du fonctionnement général du système selon la figure 2.

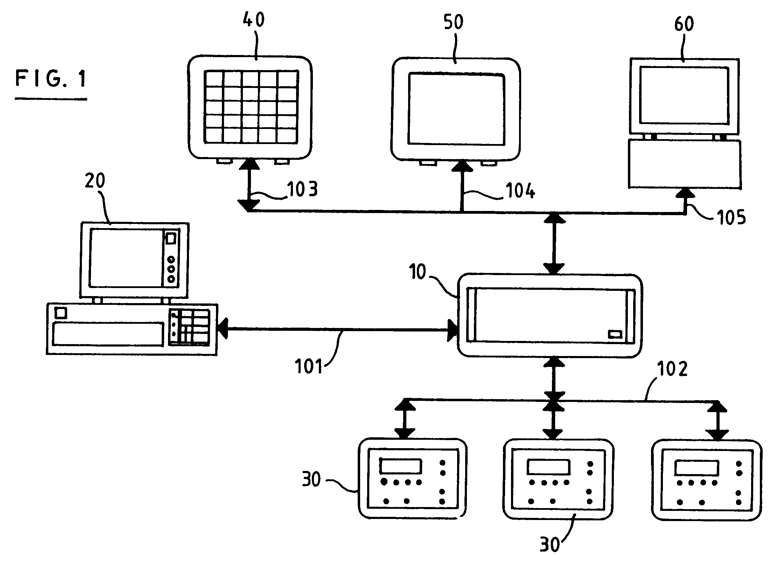

Un système de contrôle prévisionnel selon l'invention s'articule autour d'une unité centrale de gestion connectée par des canaux de communication de données à plusieurs unités parmi lesquelles, notamment, plusieurs terminaux d'agents et, dans une zone d'accès pour la clientèle, un dispositif de sélection de services et un dispositif d'appel. D'autres unités peuvent encore être prévues et la figure 1 représente un exemple d'implantation comprenant une unité centrale 10, un terminal d'exploitation 20, plusieurs terminaux d'agents 30, un dispositif de sélection de services 40, un dispositif d'appels 50 et un poste de contrôle visuel 60.

L'unité centrale de gestion 10 est le centre vital du système, qui est organisé pour effectuer périodiquement et de manière adaptative une simulation prévisionnelle des différents postes de service qui seront requis pour satisfaire la clientèle en fonction de l'évolution de l'affluence de la clientèle et en fonction de divers paramètres englobant notamment la compétence des agents, lesquels paramètres sont périodiquement rafraîchis de manière à éviter une situation alarmante qui risquerait d'entraver voire de rendre impossible un service de bonne qualité, ou simplement un fonctionnement efficace des services. L'unité centrale 10 comprend une mémoire dans laquelle sont chargés les paramètres choisis pour régir le fonctionnement des services ainsi que les données déterminées au cours de la simulation périodique. Les paramètres devant régir le fonctionnement du système peuvent être introduits à partir du terminal d'exploitation 20 et être chargés en mémoire au moyen du canal de communications 101. L'unité centrale comprend également un processeur, d'un type quelconque, qui effectue les opérations requises par le processus de simulation sous la direction de logiciels tournant dans l'unité centrale.

Un terminal d'agent 30 est prévu à chaque poste de travail, chaque terminal comportant un clavier de commande pour permettre à l'agent en service de communiquer avec l'unité centrale 10 au moyen des canaux de communications 102, et un dispositif d'affichage pour informer en permanence l'agent de l'évolution de l'affluence de la clientèle qui lui est destinée ou qu'il sera appelé à servir.

Le dispositif de sélection de services 40, connecté à l'unité centrale 10 par le canal de communications 103, sert à chaque client qui se présente à l'accueil, à sélectionner le service souhaité. Le dispositif de sélection de services peut être un dispositif connu quelconque, par exemple un écran tactile.

Le dispositif d'appel 50 sert à afficher, dans la zone d'attente de la clientèle, le numéro d'ordre de chaque client pouvant être servi au fur et à mesure qu'est disponible un agent compétent pour le service souhaité. Le dispositif d'appel 50 peut par exemple être constitué d'un écran de visualisation connecté à l'unité centrale 10 par le canal de communications 104.

Un poste de contrôle visuel 60 peut éventuellement être prévu dans la zone d'accueil pour permettre à un préposé à l'accueil, grâce à un canal de communications 105, de vérifier l'état instantané de l'affluence de la clientèle en attente d'être servie. Les canaux de communications reliant les différentes unités du système peuvent être réalisés dans des formes diverses connues de l'homme du métier.

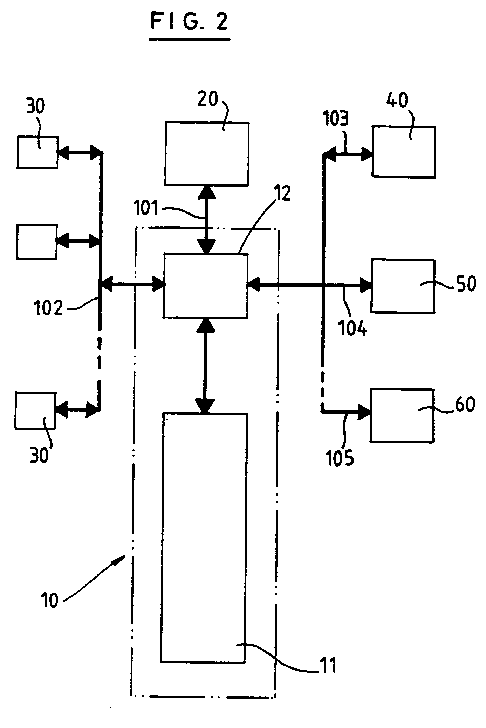

La figure 2 est un schéma fonctionnel par blocs d'un système conforme à l'invention, dans lequel sont représentés schématiquement la mémoire 11 et le processeur 12 de l'unité centrale 10. Conformément à l'invention, la mémoire est organisée pour contenir des données et paramètres divers destinés à servir au processeur à effectuer la simulation prévisionnelle dynamique.

Une liste des compétences des agents 201 contient, par niveau de priorité pour chaque agent, ses degrés de compétence pour les prestations qu'il est censé avoir normalement à fournir.

Une liste des effectifs moyens 202 contient les paramètres qui déterminent, pour chaque service, le nombre moyen d'agents que l'on souhaite être disponibles en première priorité pour assurer ce service.

Une liste des effectifs minimum 203 contient les paramètres qui déterminent, pour chaque service, le nombre minimum d'agents nécessaire pour assurer le service en première priorité.

Une liste des priorités de services 204 contient, pour chaque agent, la désignation des services par niveau de priorité, pour lesquels il est compétent. La liste 204 est dérivée de la liste des compétences 201 en tenant compte du paramètre "effectif moyen" fixé pour chaque service dans la liste 202.

Une liste des clients en attente 205 est mise à jour chaque fois qu'un client se présente au dispositif de sélection de services 40 et y fait une sélection de service et chaque fois qu'un client est servi.

Une liste des priorités d'appels 206 contient, pour chaque agent présent, les désignations des services auxquels il est effectivement affecté pour servir les clients. Tant que l'activité reste normale, cette liste reste inchangée et les agents affectés à un service sont ceux qui sont compétents pour ce service en première priorité. En cas d'affluence anormale, la liste des priorités d'appels 206 est modifiée conformément à l'invention, comme on le verra plus loin, de manière à éviter l'encombrement d'un service et une attente trop longue des clients demandant ce service.

Une table des temps de référence 207 indique le temps de prestation moyen pour chaque service.

Une table des temps d'attente maximum 208 contient le temps d'attente maximum attribué pour chaque service.

Une table de seuils d'encombrement 209 contient des paramètres, calculés par l'unité centrale, qui déterminent l'occupation temporelle de chaque agent par rapport à une occupation à temps plein en tenant compte des temps de référence et des temps d'attente maximum.

L'unité centrale 10 surveille en permanence l'évolution de l'affluence de la clientèle, met à jour en permanence les listes mémorisées, calcule les données d'affluence en fonction de paramètres résidant en mémoire et détermine en permanence les risques d'encombrement. L'unité centrale exécute les opérations qu'imposent les différentes tâches qui lui sont assignées sous la direction des logiciels d'opération mémorisés.

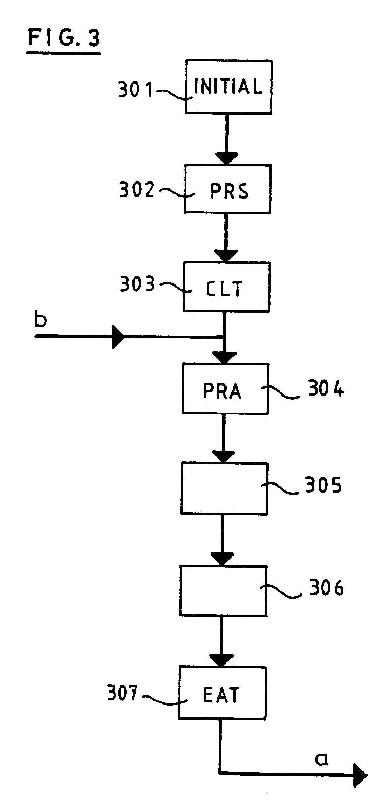

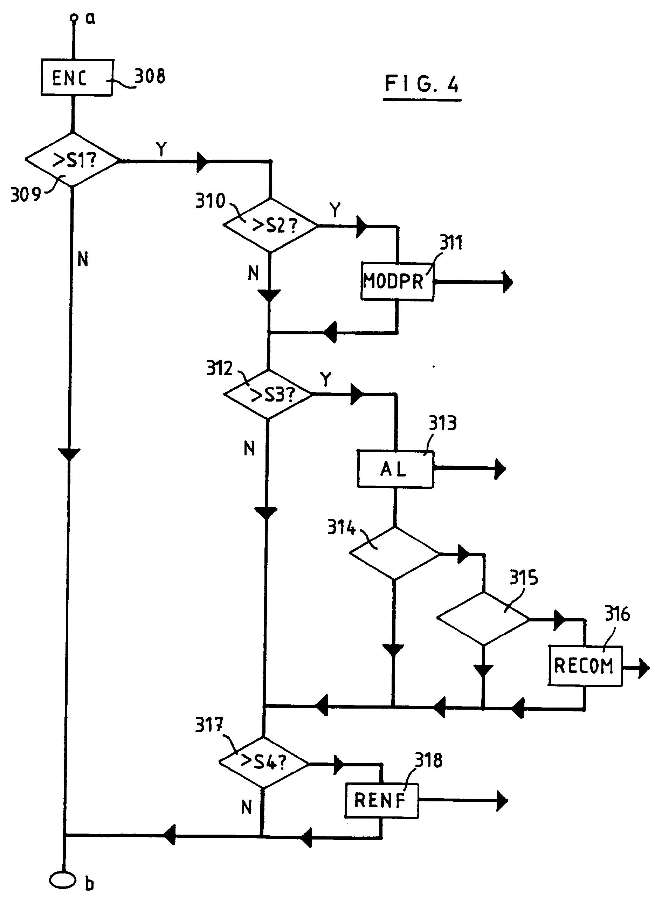

Le fonctionnement de l'unité centrale 10 est décrit ci-après à l'aide de l'organigramme représenté dans les figures 3 et 4. Se reportant d'abord à la figure 3, le bloc 301 représente l'étape d'initialisation du système lors de la mise en route. Cette étape peut par exemple comprendre le chargement des paramètres de fonctionnement dans la mémoire 11 de l'unité centrale 10 à moins que ces paramètres n'y résident déjà. Les paramètres de fonctionnement du système sont mémorisés dans des emplacements de la mémoire, par exemple sous la forme des listes et tables 205 à 209 décrites plus haut. L'étape d'initialisation comprend également la mise en place de la liste des compétences d'agents 201 à partir des signaux de présence des agents, envoyés par les agents présents depuis leurs terminaux 30 par les canaux de communications 102.

A l'étape 302 le processeur de l'unité centrale 10 compose, pour chaque agent présent, la liste 204 des priorités de services PRS à partir des données contenues dans la liste de compétences 201 et dans la table d'effectifs moyens 203. La liste 204 des priorités de services PRS est mise à jour, à chaque modification de l'effectif de service actif.

L'étape 303 représente la mise en mémoire des sélections de services effectuées successivement par les clients sur le dispositif de sélection de services 40. Chaque fois qu'une sélection est faite sur le dispositif de sélection 40, l'identification du service est envoyée sur le canal 103 vers l'unité centrale 10 qui mémorise cette identification, l'heure d'arrivée du client et le numéro d'ordre de celui-ci, dans la liste des clients en attente 205. Lorsqu'une entrée est faite dans la liste des clients en attente 205, l'unité centrale 10 envoie une information au terminal 30 de chaque agent concerné en première priorité par le service souhaité, ces agents étant désignés dans la liste 204 des priorités de services.

A partir des entrées de la liste des clients en attente 205 et des données de la liste des priorités de services 204, le processeur détermine alors, dans l'étape 304, une liste 206 des priorités d'appels PRA pour chaque agent.

Lorsqu'un agent est prêt à recevoir un client qui a demandé un service pour lequel il est compétent, grâce à son clavier de commande 31 il envoie un signal d'appel à l'unité centrale 10 qui consulte la liste des priorités d'appels 206 de cet agent et envoie un message d'appel au dispositif d'appel 50 dans la zone d'attente. Le client appelé peut alors se diriger vers le bureau de l'agent libre concerné. L'unité centrale 10 met alors à jour (étape 305) la liste des clients en attente 205 ainsi que les données affichées sur le terminal de chaque agent concerné.

En cas d'affluence normale, lorsque les opérations avec la clientèle se déroulent de façon régulière et sans dépassement de seuils d'encombrement prédéterminés comme on le verra plus loin, la liste 206 des priorités d'appels PRA reste telle quelle.

Cependant, lorsque les temps d'attente de la clientèle s'allongent soit en raison de temps de traitement d'opérations déraisonnablement longs, soit en raison d'une affluence anormale, l'unité centrale de gestion 10 envoie un signal d'avertissement aux terminaux d'agents 30 concernés et décide de diverses actions afin de prévenir le risque de conduire à une situation qui pourrait devenir alarmante s'il n'y était porté remède.

En effet, conformément à l'invention, l'unité centrale 10 calcule en permanence les temps d'attente probable ATT de la clientèle pour chaque service (étape 306), puis elle calcule (étape 307) les écarts entre les temps d'attente probable calculés et les temps d'attente maximum correspondants lus dans la table 208. Périodiquement, l'unité centrale effectue une simulation prévisionnelle de l'encombrement en fonction de paramètres prédéterminés résidant en mémoire. La flèche marquée "a" dans l'organigramme de la figure 3 représente l'appel périodique du logiciel de contrôle d'encombrement.

Se reportant à présent à la figure 4, le processus de contrôle d'encombrement débute par le calcul de l'encombrement pour chaque service. Ce calcul est effectué régulièrement par le processeur à partir des écarts de temps d'attente de la clientèle déterminés pour chaque service à l'étape 307. Le calcul de l'encombrement d'un service peut se faire de diverses manières. Dans un processus exemplaire, l'encombrement est calculé en deux étapes. La première (étape 308) consiste à évaluer l'encombrement relatif au moyen d'une fonction d'encombrement prédéterminée. Le processeur peut être commandé pour calculer soit la moyenne simple des écarts de temps d'attente des clients, soit la moyenne quadratique des écarts des temps d'attente des clients demandeurs d'un même service. D'autres fonctions peuvent être adoptées.

L'étape suivante 309 du processus consiste à déterminer le degré d'encombrement absolu de chaque service à partir de l'encombrement relatif et du nombre d'agents affectés à ce service, tel que déterminé à partir de la liste des priorités d'appels 206. Si le processeur détermine qu'il n'y a pas état d'encombrement, la branche négative issue du bloc 309 aiguille le processus vers le bloc 304 de la figure 3 représentant la constitution de la liste 206 des priorités d'appels PRA.

Par contre, si le processeur détermine qu'il existe un état d'encombrement, l'unité centrale appelle un sous-programme par lequel le degré d'encombrement est comparé à un certain nombre de seuils d'encombrement successifs prédéterminés mémorisés. A titre d'exemple, on supposera quatre seuils d'encombrement prédéterminés S1, S2, S3, S4. Lorsque le processeur détermine que le degré d'encombrement ENC dépasse un premier seuil d'encombrement S1 prédéterminé, indiquant qu'il existe un état d'encombrement, la branche positive issue du bloc 309 aiguille vers l'étape de décision 310 au cours de laquelle l'unité centrale vérifie si le degré d'encombrement ENC requiert ou non une modification des priorités d'appels. Pour ce faire, l'unité centrale compare le degré d'encombrement ENC à un seuil d'encombrement S2 prédéterminé. Si le degré d'encombrement ENC dépasse le seuil S2 précité, l'unité centrale appelle le logiciel de modification des priorités MODP (bloc 311) afin d'exécuter un processus visant à rechercher des agents complémentaires compétents en deuxième priorité pour servir les clients dont le temps d'attente est trop long, de manière à ramener les temps d'attente de ces clients en deçà des temps d'attente maximums prédéterminés tels que fixés dans la table 208. Selon l'affluence, le processus de recherche peut se poursuivre de proche en proche en explorant chacun des niveaux de priorités de la liste des compétences 201.

Grâce à la modification des priorités d'appels un certain nombre d'agents supplémentaires, désignés parmi ceux qui occupent un niveau de priorité de service inférieur, se trouvent affectés au service de première priorité, le nombre d'agents supplémentaires étant automatiquement adapté à l'affluence momentanée des demandes pour le service en question. Le nombre d'agents affectés à un service encombré peut ainsi être augmenté temporairement de manière à permettre de résorber l'affluence anormale et d'éviter un état d'encombrement pouvant devenir alarmant. L'unité centrale 10 informe les agents de l'état d'encombrement en envoyant à leurs terminaux 30 des signaux qui s'affichent sur les dispositifs d'affichage 32. Un signal d'encombrement peut également être envoyé au dispositif de sélection de services 40. Après une modification MODP des priorités d'appels, l'unité centrale met à jour la liste 206 des priorités d'appels PRA.

Lorsque l'état d'encombrement persiste, l'unité centrale 10 compare le degré d'encombrement ENC à un seuil S3 prédéterminé (étape 312). Si elle constate que, pour un service donné, ledit seuil d'encombrement S3 se trouve dépassé, l'unité centrale enclenche un système d'alerte (étape 313) grâce auquel un message d'alerte AL est envoyé à chaque terminal d'agent 30 sur lequel une indication informe l'agent de la situation alarmante qui se crée. Un message d'alerte peut également être envoyé au poste de contrôle visuel 60 lorsqu'un tel poste est prévu, et/ou au terminal d'exploitation 20.

A l'étape 314, l'unité centrale 10 vérifie si elle a l'autorisation d'afficher sur le terminal 30 de l'agent, un temps recommandé pour traiter l'opération concernant le client reçu. Lorsque la réponse est affirmative, l'unité centrale 10 vérifie (étape 315) dans les consignes de fonctionnement mémorisées si elle doit appeler un processus de contrôle du temps recommandé. En cas de réponse affirmative, l'unité centrale, à l'étape 316, appelle un procédé de contrôle du temps recommandé REC et envoie un signal au terminal de l'agent concerné pour l'informer de la mise en place du processus de contrôle de temps pendant lequel est enregistré l'écart entre le temps de traitement réel et le temps recommandé. Lorsqu'une réponse négative est obtenue à l'interrogation effectuée à l'une des étapes 312, 314 et 315, le processus enchaîne directement sur l'étape 317.

A l'étape 317 du processus, l'unité centrale 10 vérifie si le degré d'encombrement existant nécessite d'appeler un processus de recherche de renfort pour servir les clients en attente. A cet effet, l'unité centrale détermine si le degré d'encombrement ENC dépasse un seuil S4. Si la réponse est affirmative, un processus de recherche de renfort RENF est mis en route (bloc 318). Pour ce faire, l'unité centrale 10 consulte la liste des compétences 201 et la liste des agents disponibles pour déterminer si un agent peut être appelé en renfort et lui envoyer un signal d'appel en renfort. Parmi le personnel de l'agence, en effet, il y a du personnel qui n'est pas a priori destiné à servir les clients qui se présentent aux guichets, par exemple les conseillers extérieurs, du personnel arrière guichet, l'adjoint du chef d'agence ou le chef d'agence lui-même. En cas d'affluence et d'encombrement d'un service, ce personnel pourrait donner un coup de main pour désengorger l'agence. Lorsqu'un tel agent peut répondre positivement, il en informe l'unité centrale à l'aide de son clavier de commande et un signal d'appel se trouve envoyé à l'écran d'appel 50 dans la zone d'attente. Si l'agent appelé répond négativement, l'unité centrale 10 consulte à nouveau la liste de compétences 201 pour y identifier un autre agent pouvant être appelé en renfort.

Dès que l'unité centrale détermine que l'encombrement d'un service redescend en dessous du seuil S4, un agent appelé en renfort est informé automatiquement qu'il peut reprendre son travail normal.

Lorsque, à l'étape 317, l'unité centrale 10 détermine qu'un appel en renfort n'est pas requis, le processus renvoie directement à la chaîne principale, à l'étape 304 (figure 3).

Lorsqu'un agent termine son service, il en informe l'unité centrale à l'aide du clavier de commande de sa console et l'unité centrale met à jour les listes en mémoire tandis qu'elle inhibe la possibilité de sélectionner cet agent. Dans la simulation prévisionnelle qu'elle effectue périodiquement, l'unité centrale 10 ne tient alors plus compte de cet agent pour l'évaluation de l'encombrement. D'autre part, dans le calcul de l'encombrement qu'elle effectue régulièrement, l'unité centrale tient compte de l'heure prévue à laquelle un agent cesse son activité soit pour un rendez-vous, soit pour son heure de table, soit encore pour la fin de son service. L'unité centrale peut être organisée pour veiller à ce que l'encombrement personnel d'un agent ne soit point supérieur au temps qu'il reste à cet agent jusqu'à la fin de son service. A ce moment, l'unité centrale supprime la possibilité de sélectionner cet agent sur le dispositif de sélection de services 40.

Ainsi, le système conforme à l'invention assure-t-il une gestion adaptative et prévisionnelle des prestations de services, fournis à la clientèle, en fonction de la compétence des agents disponibles et du nombre de demandes de services.

Le mode de réalisation décrit dans ce qui précède est un exemple donné à titre illustratif et l'invention n'est nullement limitée à cet exemple.

## Revendications

1. Système pour contrôler de manière adaptative et prévisionnelle l'activité d'un ensemble de postes de travail en fonction de l'affluence des demandes de services, comprenant une unité centrale (10), qui est connectée, au moyen de canaux de communications (101-104), à plusieurs terminaux d'agents (30), à un dispositif de sélection par le client du service souhaité (40) et à un dispositif d'appel (50) affichant, dans la zone d'attente de la clientèle, le numéro d'ordre de chaque client pouvant être servi, lequel système est caractérisé en ce que l'unité centrale (10) est agencée et organisée pour :
- mémoriser une liste des priorités de services (PRS) désignant, pour chaque agent, les services par niveau de priorité pour lesquels il est compétent;
- mémoriser une table des temps de référence indiquant le temps de prestation moyen pour chaque service à fournir;
- calculer les écarts de temps d'attente probables (EAT) pour chaque service à partir des temps d'attente de référence et du nombre de clients en attente;
- calculer un degré d'encombrement (ENC) pour chaque service à partir des écarts de temps d'attente probable (EAT);
- mémoriser une liste des priorités d'appels (PRA) désignant, pour chaque agent, les services auxquels il est affecté par niveau de priorité, cette liste étant établie à partir de la liste des priorités de services (PRS) en réponse à un signal représentant le degré d'encombrement (ENC) calculé, les agents affectés à un service étant ceux qui sont compétents pour ce service en première priorité lorsque le degré d'encombrement (ENC) calculé est inférieur à un seuil d'encombrement (S1) prédéterminé.

2. Système selon la revendication 1, caractérisé en ce que l'unité centrale (10) appelle un processus de contrôle d'encombrement lorsque le degré d'encombrement (ENC) calculé est supérieur au seuil d'encombrement (S1) précité, le processus de contrôle d'encombrement étant organisé pour produire un signal d'action lorsque le degré d'encombrement (ENC) dépasse l'un quelconque de plusieurs seuils d'encombrement distincts (S1, S2, S3, S4).

3. Système selon la revendication 2, caractérisé en ce que le degré d'encombrement (ENC) calculé est comparé à un seuil d'encombrement (S2) prédéterminé, et en ce que l'unité centrale (10) appelle un processus pour modifier la liste des priorités d'appels (PRA) mémorisée lorsque le degré d'encombrement (ENC) calculé est supérieur au seuil d'encombrement (S2) précité, en recherchant des agents complémentaires compétents avec une priorité autre que première.

4. Système selon la revendication 2, caractérisé en ce que le degré d'encombrement (ENC) calculé est comparé à un seuil d'encombrement (S3) prédéterminé et en ce que l'unité centrale (10) produit un signal d'alerte (AL) lorsque le degré d'encombrement (ENC) calculé est supérieur audit seuil d'encombrement (S3) prédéterminé, le signal d'alerte (AL) étant transmis aux terminaux d'agents (30) pour y être affiché.

5. Système selon la revendication 4, caractérisé en ce que, après l'émission d'un signal d'alerte (AL), l'unité centrale (10) produit un signal pour demander l'autorisation d'imposer aux agents un temps recommandé (RECOM) pour exécuter leurs prestations, et pour appeler un processus de contrôle du temps recommandé.

6. Système selon la revendication 2, caractérisé en ce que le degré d'encombrement (ENC) calculé est comparé à un seuil d'encombrement (S4) prédéterminé et en ce que l'unité centrale (10) produit un signal de demande de renfort (RENF) destiné à être affiché sur le terminal d'agent (30) d'au moins un agent compétent pour le service demandé en priorité de niveau inférieur.

7. Système selon l'une quelconque des revendications précédentes, caractérisé en ce que l'unité centrale (10) tient à jour une liste des clients en attente en réponse à des signaux envoyés à partir du dispositif de sélection de services (40).

8. Système selon la revendication 7, caractérisé en ce que le dispositif de sélection de services (40) est un écran tactile.

9. Système selon l'une quelconque des revendications précédentes, caractérisé en ce que le dispositif d'appel (50) connecté à l'unité centrale (10) et servant à appeler un client devant être servi est constitué par un écran.

10. Système selon l'une quelconque des revendications précédentes, caractérisé en ce que l'unité centrale (10) est connectée en outre à un terminal d'exploitation (20).

11. Système selon l'une quelconque des revendications précédentes, caractérisé en ce que l'unité centrale (10) est connectée en outre à un poste de contrôle visuel (60).

## Patentansprüche

1. System zur adaptativen und vorausplanenden Steuerung der Aktivität einer Gruppe von Arbeitsplätzen in Abhängigkeit vom Zulauf der Anforderungen von Dienstleistungen, umfassend eine Zentraleinheit (10), die mit Hilfe von Kommunikationskanälen (101-104) an mehrere Angestelltenterminals (30) , an eine Vorrichtung (40) zur Wahl der gewünschten Dienstleistung durch den Kunden und an eine Aufrufvorrichtung (50) angeschlossen ist, die im Wartebereich der Kunden die laufende Nummer jedes Kunden, der bedient werden kann, anzeigt, wobei dieses System dadurch gekennzeichnet ist, daß die Zentraleinheit (10) ausgebildet und organisiert ist, um
- eine Liste der Dienstleistungsprioritäten (PRS) zu speichern, die für jeden Angestellten die Dienstleistungen pro Prioritätsebene bezeichnet, für die er zuständig ist;
- eine Tabelle der Bezugszeiten zu speichern, die die mittlere Ausführungszeit für jede zu erbringende Dienstleistung angibt;
- die wahrscheinlichen Wartezeitabweichungen (EAT) für jede Dienstleistung ausgehend von den Bezugswartezeiten und der Anzahl wartender Kunden zu berechnen;
- einen Überfüllungsgrad (ENC) für jede Dienstleistung ausgehend von den wahrscheinlichen Wartezeitabweichungen (EAT) zu berechnen;
- eine Liste der Aufrufprioritäten (PRA) zu speichern, die für jeden Angestellten die Dienstleistungen bezeichnet, die ihm pro Prioritätsebene zugewiesen sind, wobei diese Liste ausgehend von der Liste der Dienstleistungsprioritäten (PRS) in Antwort auf ein Signal erstellt wird, das den errechneten Überfüllungsgrad (ENC) darstellt, wobei die Angestellten, denen eine Dienstleistung zugewiesen wird, diejenigen sind, die für diese Dienstleistung in erster Priorität zuständig sind, wenn der errechnete Überfüllungsgrad (ENC) kleiner als eine vorbestimmte Überfüllungsschwelle ist.

2. System nach Anspruch 1, dadurch gekennzeichnet, daß die Zentraleinheit (10) einen Überfüllungssteuerprozess aufruft, wenn der errechnete Überfüllungsgrad (ENC) größer als die genannte Überfüllungsschwelle (S1) ist, wobei der Überfüllungssteuerprozess so organisiert ist, daß ein Aktionssignal erzeugt wird, wenn der Überfüllungsgrad (ENC) eine beliebige von mehreren verschiedenen Überfüllungsschwellen (S1, S2, S3, S4) überschreitet.

3. System nach Anspruch 2, dadurch gekennzeichnet, daß der errechnete Überfüllungsgrad (ENC) mit einer vorbestimmten Überfüllungsschwelle (S2) verglichen wird und daß die Zentraleinheit (10) einen Prozess aufruft, um die gespeicherte Liste der Aufrufprioritäten (PRA) zu ändern, wenn der errechnete Überfüllungsgrad (ENC) größer als die genannte Überfüllungsschwelle (S2) ist, indem zusätzliche zuständige Angestellte mit einer anderen als einer ersten Priorität gesucht werden.

4. System nach Anspruch 2, dadurch gekennzeichnet, daß der errechnete Überfüllungsgrad (ENC) mit einer vorbestimmten Überfüllungsschwelle (S3) verglichen wird und daß die Zentraleinheit (10) ein Meldesignal (AL) erzeugt, wenn der errechnete Überfüllungsgrad (ENC) größer als diese vorbestimmte Überfüllungsschwelle (S3) ist, wobei das Meldesignal (AL) auf die Angestelltenterminals (30) übertragen wird, um dort angezeigt zu werden.

5. System nach Anspruch 4, dadurch gekennzeichnet, daß die Zentraleinheit nach der Sendung eines Meldesignals (AL) ein Signal erzeugt, um die Erlaubnis anzufordern, den Angestellten eine empfohlene Zeit (RECOM) zur Ausführung ihrer Leistungen aufzuerlegen und um einen Prozess zur Überwachung der empfohlenen Zeit aufzurufen.

6. System nach Anspruch 2, dadurch gekennzeichnet, daß der errechnete Überfüllungsgrad (ENC) mit einer vorbestimmten Überfüllungsschwelle (S4) verglichen wird und daß die Zentraleinheit (10) ein Verstärkungsanforderungssignal (RENF) erzeugt, das dazu bestimmt ist, auf dem Angestelltenterminal (30) mindestens eines Angestellten angezeigt zu werden, der für die verlangte Dienstleistung in Priorität niedrigerer Ebene zuständig ist.

7. System nach einem der vorhergehenden Ansprüche, dadurch gekennzeichnet, daß die Zentraleinheit (10) eine Liste der wartenden Kunden in Antwort auf Signale auf dem Laufenden hält, die von der Dienstleistungswahlvorrichtung (40) aus gesendet werden.

8. System nach Anspruch 7, dadurch gekennzeichnet, daß die Dienstleistungswahlvorrichtung (40) ein Tastschirm ist.

9. System nach einem der vorhergehenden Ansprüche, dadurch gekennzeichnet, daß die an die Zentraleinheit (10) angeschlossene Aufrufvorrichtung (50), die zum Aufrufen eines Kunden, der bedient werden soll, dient, aus einem Bildschirm besteht.

10. System nach einem der vorhergehenden Ansprüche, dadurch gekennzeichnet, daß die Zentraleinheit (10) außerdem an einen Betriebsterminal (20) angeschlossen ist.

11. System nach einem der vorhergehenden Ansprüche, dadurch gekennzeichnet, daß die Zentraleinheit (10) außerdem an ein Sichtüberwachungsgerät (60) angeschlossen ist.

## Claims

1. A system for the adaptive and estimative control of the attendance at a group of work stations as a function of the concurrence of requests for services, comprising a central unit (10) connected through communication channels (101-104) to a plurality of agent terminals (30), a device (40) for the selection by the client of the requested service and a calling device (50) displaying in the waiting area for the clientele, the serial number of every client allowed to be served, which system is characterized in that the central unit (10) is arranged and organised for:
- storing a list of the service priorities (PRS) showing, for every agent, the services listed according to priority level for which he is qualified;
- storing a table of reference times showing the average attendance time for every service to be rendered;
- computing the probable waiting time divergence (EAT) for each service from the reference waiting times and the number of clients being waiting;
- computing an overcrowding rate (ENC) for each service from the probable waiting time divergences (EAT);
- storing a list of the calling priorities (PRA) recording, for every agent, the services assigned to him according to priority level, said list being drawn up on the basis of the service priority list (PRS) in response to a signal representing the computed overcrowding rate (ENC), the agents who are being assigned to a service being those who are qualified for said service on a first priority when the computed overcrowding rate (ENC) is lower than a predetermined overcrowding threshold (S1).

2. The system as set forth in claim 1, characterized in that the central unit (10) calls in an overcrowding control procedure when the computed overcrowding rate (ENC) is greater than the aforementioned overcrowding threshold (S1), said overcrowding control procedure being organized for producing an action signal when the overcrowding rate (ENC) is higher than any one of a plurality of distinct overcrowding thresholds (S1, S2, S3, S4).

3. The system as set forth in claim 2, characterized in that the computed overcrowding rate (ENC) is compared with a predetermined overcrowding threshold (S2) and in that the central unit (10) calls in a procedure for modifying the calling priority list (PRA) as stored when the computed overcrowding rate (ENC) is greater than the aforementioned overcrowding threshold (S2), by searching for additional qualified agents listed with a priority other than first.

4. The system as set forth in claim 2, characterized in that the computed overcrowding rate (ENC) is compared with a predetermined overcrowding threshold (S3) and in that the central unit (10) produces a warning signal (AL) when the computed overcrowding rate (ENC) is greater than said predetermined overcrowding threshold (S3), said warning signal (AL) being transmitted to the agent terminal (30) for being displayed there.

5. The system as set forth in claim 4, characterized in that after transmission of a warning signal (AL), the central unit (10) produces a signal for requesting the authorization to assign to the agents a recommended lapse of time (RECOM) within which to perform their duties, and for calling in a procedure for the control of the recommended time.

6. The system as set forth in claim 2, characterized in that the computed overcrowding rate (ENC) is compared with a predetermined overcrowding threshold (S4) and in that the central unit (10) produces a support request signal (RENF) intended to be displayed at the agent terminal (30) of at least one agent qualified for the requested service with a lower priority level.

7. The system as set forth in any of the preceding claims, characterized in that the central unit (30) is keeping up-to-date a list of the clients being waiting in response to signals being sent from the service selection device (40).

8. The system as set forth in claim 7, characterized in that the service selection device (40) is a touch screen.

9. The system as set forth in any of the preceding claims, characterized in that the calling device (50) connected to the central unit (10) and intended for calling a client waiting for being served is comprised of a screen.

10. The system as set forth in any of the preceding claims, characterized in that the central unit (10) is further connected to a management terminal.

11. The system as set forth in any of the preceding claims, characterized in that the central unit (10) is further connected to a visual control station (60).
